Europäisches Patentamt

European Patent Office

Office européen des brevets

(19)

(11) **EP 1 557 740 A2**

(12) **EUROPEAN PATENT APPLICATION**

(43) Date of publication:
   **27.07.2005 Bulletin 2005/30**

(51) Int Cl.⁷: **G06F 1/00**, G06F 7/72

(21) Application number: **05250258.0**

(22) Date of filing: **19.01.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **19.01.2004 KR 2004003804**

(71) Applicant: **Samsung Electronics Co., Ltd.
   Suwon-si, Gyeonggi-do (KR)**

(72) Inventor: **Baek, Yoo-jin
   Seongnam-si, Gyeonggi-do (KR)**

(74) Representative: **Mounteney, Simon James
   Marks & Clerk
   90 Long Acre
   London WC2E 9RA (GB)**

(54) **Methods, circuits and computer program products for processing masked data in an advanced encryption system**

(57) An Advanced Encryption System (AES) compliant circuit can include a multiplier circuit configured to multiply masked data with masking data to provide multiplied outputs therefrom and a combinatorial circuit coupled to the multiplier circuit and configured to combine the multiplied outputs with at least one of the masked data or at least one of the masking data.

**FIG. 1**

**Description**

CROSS-REFERENCE TO RELATED APPLICATION

This application claims the priority of Korean Patent Application No. 2004-3804, filed on January 19, 2004, in the Korean Intellectual Property Office, the disclosure of which is incorporated herein in its entirety by reference.

FIELD OF THE INVENTION

The present invention relates to methods circuits, and computer program products for finite field multipliers.

BACKGROUND

With the advent of an information society, the protection of information using cipher algorithms has become increasingly important. Attention has been focused on a block cipher algorithm, which is a type of cipher algorithm, because of its rapid encrypting/decrypting speed and short key length. The block cipher algorithm implies the need for stability in its mathematical structure and stability in the environment to which the block cipher algorithm is applied.
Differential power analysis and simple power analysis are methods of analyzing a power signal generated by a low power consumption device, such as a smart card, in the course of calculations (or operations) to discover secret information stored in the smart card when the block cipher algorithm is applied to the smart card.
Differential power analysis and the simple power analysis can be carried out based on the attacker estimating a specific bit of a ciphertext after one round, which corresponds to a plaintext if the plaintext is known. A method of preventing the differential power analysis and the simple power analysis is to prevent the attacker from knowing the plaintext in the course of calculations carried out inside the smart card.
For the purpose of safe operation of the block cipher algorithm, various countermeasures against the differential power analysis and the simple power analysis have been proposed. The countermeasures include hardware methods and software methods. The hardware methods include a method of generating a noise power, a method of randomizing an operation sequence, and a method of filtering a power signal. However, these methods are still not perfect. The software methods include a masking method, which is known to be a powerful countermeasure against the primary differential power analysis. The masking method generates a random number inside a smart card and exclusive-ORs the random number and a plaintext to make the plaintext be seen as a random number, thereby disabling power analysis.

SUMMARY

Embodiments according to the invention can provide methods, circuits, and computer program products for processing masked data in an advanced encryption system. Pursuant to these embodiments, an Advanced Encryption System (AES) compliant circuit can include a multiplier circuit configured to multiply masked data with masking data to provide multiplied outputs therefrom and a combinatorial circuit coupled to the multiplier circuit and configured to combine the multiplied outputs with at least one of the masked data or at least one of the masking data.
In some embodiments according to the invention, the multiplier circuit includes a first finite field multiplier for receiving first masked data and second masked data and carrying out finite field multiplication on the first masked data and second masked data, a second finite field multiplier for receiving the first masked data and first masking data and carrying out finite field multiplication on the first masked data and first masking data, a third finite field multiplier for receiving the second masked data and second masking data and carrying out finite field multiplication on the second masked data and second masking data, a fourth finite field multiplier for receiving the first masking data and the second masking data and carrying out finite field multiplication on the first masking data and second masking data.
The combinatorial circuit can include a first exclusive-OR circuit for receiving the output signals of the first and second finite field multipliers and exclusive-ORing the output signals of the first and second finite field multipliers, a second exclusive-OR circuit for receiving the second masked data and the output signal of the first exclusive-OR circuit and exclusive-ORing the second masked data and the output signal of the first exclusive-OR circuit, a third exclusive-OR circuit for receiving the output signals of the third and fourth finite field multipliers and exclusive-ORing the output signals of the third and fourth finite field multipliers, and a fourth exclusive-OR circuit for receiving the second masked data and the output signal of the third exclusive-OR circuit and exclusive-ORing the second masked data and the output signal of the third exclusive-OR circuit.
A method of processing data in an Advanced Encryption System (AES) can include multiplying masked data with masking data to provide multiplied outputs and combining the multiplied outputs with at least one of the masked data or at least one of the masking data.

In some embodiments according to the invention, multiplying includes generating first and second output signals using the equation

$F((x', r), (y', s)) = (x' \cdot y' \oplus x' \cdot s \oplus x' \oplus y', y' \cdot r \oplus r \cdot s \oplus x' \oplus y')$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

A computer program product for providing Advanced Encryption System (AES) compliant processing can include a computer readable medium having computer readable program code embodied therein, the computer readable program product, where the computer readable program code is configured to multiply masked data with masking data to provide multiplied outputs and computer readable program code is configured to combine the multiplied outputs with at least one of the masked data or at least one of the masking data.

BRIEF DESCRIPTION OF THE DRAWINGS

FIG. 1 illustrates circuits, methods, and computer program products for inverse operation on a finite field $GF(2^8)$ using an inverse operation in a finite field $GF(((2^2)^2)^2)$ and an S-box used in the AES (Advanced Encryption Standards) algorithm according to some embodiments of the invention.

FIG. 2 illustrates circuits, methods, and computer program products for carrying out an inverse operation in a finite field $GF(((2^2)^2)^2)$ using an inverse operation in a finite field $GF((2^2)^2)$ according to some embodiments of the invention.

FIG. 3 illustrates circuits, methods, and computer program products for carrying out a multiplication in the finite field $GF((2^2)^2)$ using an operation in a finite field $GF(2^2)$ according to some embodiments of the invention.

FIG. 4 illustrates circuits, methods, and computer program products for carrying out an inverse operation in the finite field $GF((2^2)^2)$ using an operation in the finite field $GF(2^2)$ according to some embodiments of the invention.

FIG. 5 is a block diagram illustrating multiplier circuits according to some embodiments of the present invention.

FIG. 6 is a circuit diagram illustrating the multiplier shown in FIG. 5.

FIG. 7 is a block diagram illustrating multipliers according to some embodiments of the present invention.

DETAILED DESCRIPTION OF EMBODIMENTS ACCORDING TO THE INVENTION

The present invention now will be described more fully hereinafter with reference to the accompanying figures, in which embodiments of the invention are shown. This invention may, however, be embodied in many alternate forms and should not be construed as limited to the embodiments set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that, although the terms first, second, etc. may be used herein to describe various elements, these elements should not be limited by these terms. These terms are only used to distinguish one element from another. For example, a first portion could be termed a second portion, and, similarly, a second portion could be termed a first portion without departing from the teachings of the disclosure.

As will be appreciated by one of skill in the art, the present invention may be embodied as circuits, methods, and/or computer program products. Accordingly, the present invention may take the form of an entirely hardware embodiment, an entirely software embodiment or an embodiment combining software and hardware aspects. Furthermore, the present invention may take the form of a computer program product on a computer-usable storage medium having computer-usable program code embodied in the medium. Any suitable computer readable medium may be utilized including flash memory, hard disks, CD-ROMs, optical storage devices, or magnetic storage devices.

The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

It should also be noted that in some alternate implementations, the functions/acts noted in the blocks may occur out of the order noted in the figures. For example, two blocks shown in succession may in fact be executed substantially concurrently or the blocks may sometimes be executed in the reverse order, depending upon the functionality/acts involved.

Computer program code or "code" for carrying out operations according to the present invention may be written in an object oriented programming language such as JAVA®, Smalltalk or C++, JavaScript, Visual Basic, TSQL, Perl, or in various other programming languages. Software embodiments of the present invention do not depend on implementation with a particular programming language. Portions of the code may execute entirely on one or more systems utilized by an intermediary server.

The code may execute entirely on one or more servers, or it may execute partly on a server and partly on a client within a client device or as a proxy server at an intermediate point in a communications network. In the latter scenario, the client device may be connected to a server over a LAN or a WAN (*e.g.*, an intranet), or the connection may be made through the Internet (*e.g.*, via an Internet Service Provider). It is understood that the present invention is not TCP/IP-specific or Internet-specific. The present invention may be embodied using various protocols over various types of computer networks.

The present invention is described below with reference to block diagram illustrations of circuits, methods, and computer program products according to embodiments of the invention. It is understood that each block of the illustrations, and combinations of blocks in the illustrations can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the block or blocks.

These computer program instructions may be stored in a computer-readable memory that can direct a computer or other programmable data processing apparatus to function in a particular manner, such that the instructions stored in the computer-readable memory produce an article of manufacture including instruction means which implement the function specified in the block diagrams and/or flowchart block or blocks.

The computer program instructions may be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the block diagrams and/or flowchart block or blocks.

In some embodiments according to the invention, a masking method is used to provide a function F: $\{0, 1\}^{2k} \to \{0, 1\}^{2n}$ for a given function $f:\{0, 1\}^k \to \{0, 1\}^n$. For example, boolean masking of x for k-bit binary series $x \in \{0, 1\}^k$ means an ordered pair $(x', r) \in \{0, 1\}^k \times \{0, 1\}^k$ that satisfies $x = x' \oplus r$. Here, n and k are natural numbers.

For masking $(x', r)$ of $x \in \{0, 1\}^k$, a function $F(x', r)$ makes masking of a function $f(x)$. In some embodiments according to the invention, however, x should not be clearly shown in the course of calculating the function $F(x', r)$. For example, when the function $f(x)$ is a linear function, that is, when the function $f(x)$ satisfies $f(a \oplus b) = f(a) \oplus f(b)$ for a, $b \in \{0, 1\}^k$, if $F(x'\ r)=(f(x'), f(r))$, a masking problem with respect to the linear function can be solved because a given condition (the preferable condition that x not be clearly exposed in the course of calculating the function $F(x', r)$) is satisfied.

If the function $f(x)$ is an affine function, that is, when a certain nxk matrix A and $b \in \{0, 1\}^n$ exist and $f(x) = A \cdot x \oplus b$ is satisfied for all of $x \in \{0, 1\}^k$, the given condition is satisfied if $F(x', r)=(f(x'), A.r)$. Thus, a masking problem with respect to the affine function may be solved.

The Advanced Encryption Standard (AES) algorithm is well known in the art as a standard commercial block cipher algorithm. The AES algorithm uses a variety of operations (that is, Subkey Xoring, ShiftRow, SubByte and MixColumn operations). The masking method is easily applied to the Subkey Xoring, ShiftRow and Mixcolumn operations because they are linear operations or affine operations.

However, the SubByte operation is a nonlinear operation so that the masking method may not be easily applied thereto. In particular, the SubByte operation uses an inverse operation and an affine operation in a finite field $GF(2^8)$ in parallel. Thus, a masking method for the AES algorithm can be effectively carried out if the aforementioned masking method is effectively performed for the inverse operation in the finite field $GF(2^8)$. Accordingly, In some embodiments according to the invention, a masking circuit (for example, a finite field multiplier) is used to perform masking of data in an AES compliant system. AES compliant systems are discussed further, for example, in Combinational Logic Design for AES SubByte Transformation on Masked Data, available on the Internet at http://eprint.iacr.org/2003/236.pdf, the disclosure of which is incorporated herein by reference.

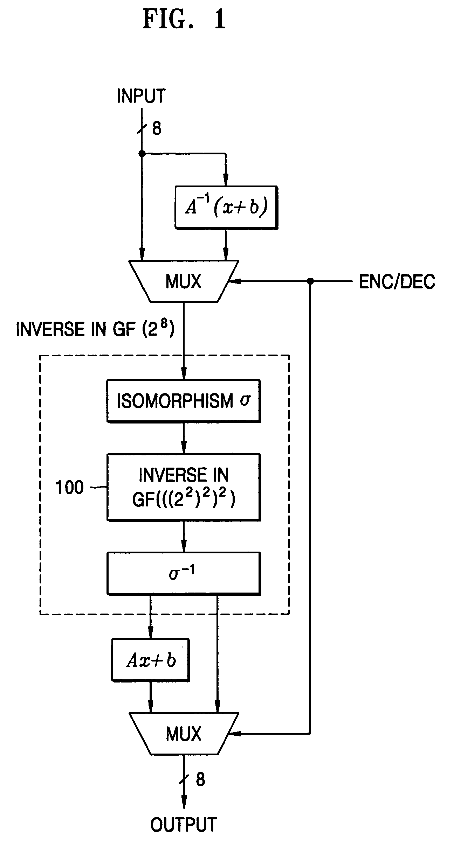

FIG. 1 illustrates a method of carrying out an inverse operation in a finite field $GF(2^8)$ using an inverse operation in a finite field $GF(((2^2)^2)^2)$ and an S-box used in the AES algorithm, which is constructed using the method. FIG. 1 is a block diagram showing the inverse operation in $GF(2^8)$, which is a main operation of the SubByte operation of the AES algorithm, using the inverse operation in $GF(((2^2)^2)^2)$. In FIG. 1, $\sigma$ represents isomorphism transferred from $GF(2^8)$ to $GF(((2^2)^2)^2)$.

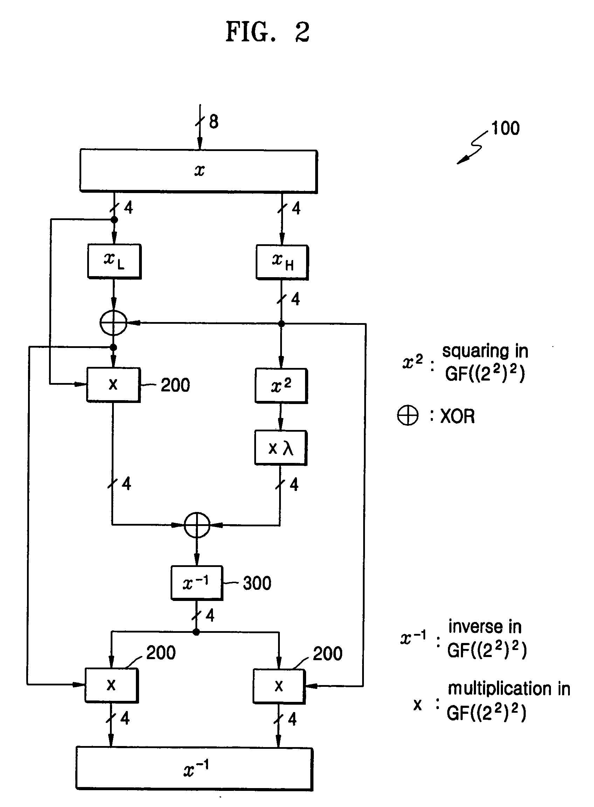

FIG. 2 illustrates a method of carrying out an inverse operation in a finite field $GF(((2^2)^2)^2)$ using an inverse operation in a finite field $GF((2^2)^2)$. Referring to FIGS. 1 and 2, since an exclusive-OR operation $\oplus$, a squaring operation $x^2$ in the finite field $GF((2^2)^2)$, and a constant multiplication operation $\times\lambda$ are linear operations, the masking method can be applied thereto. Accordingly, if the masking method can be carried out for the multiplication and inversion in $GF((2^2)^2)$, the masking method for the multiplication and inversion in $GF(((2^2)^2)^2)$ can be also performed. In FIG. 2, $x_H$ represents 4-bit data including the most significant bit (MSB) and $x_L$ represents 4-bit data including the least significant bit (LSB).

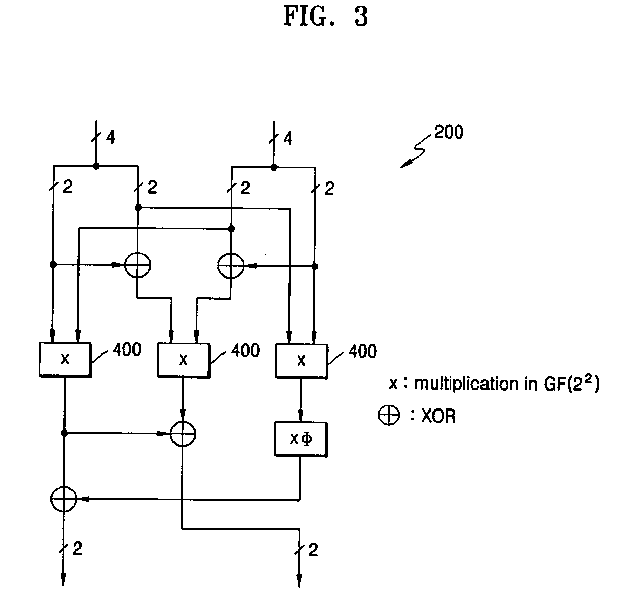

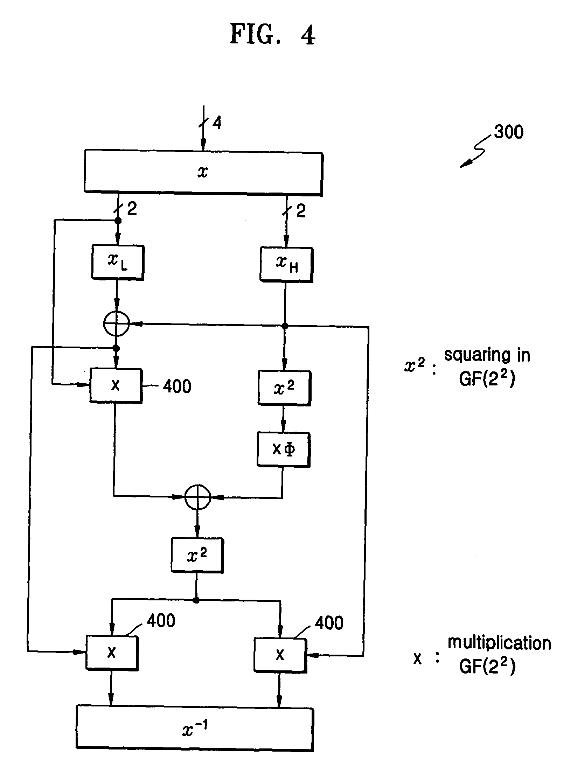

FIG. 3 illustrates a method of carrying out a multiplication in the finite field $GF((2^2)^2)$ using an operation in a finite field $GF(2^2)$, and FIG. 4 illustrates a method of carrying out an inverse operation in the finite field $GF((2^2)^2)$ using an operation in the finite field $GF(2^2)$. FIG. 3 is a circuit diagram of a constant multiplier shown in FIG. 2, and FIG. 4 is a circuit diagram of an inverse circuit operation 300 shown in FIG. 2.

Referring to FIGS. 3 and 4, the exclusive-OR operation $\oplus$, squaring operation $x^2$ in the finite field $GF(2^2)$, and constant multiplication operation $\times\lambda$ are linear operations such that the masking method can be applied thereto. Accordingly, if the masking method could be carried out for the multiplication in $GF(2^2)$, the masking method for the multiplication and inversion in $GF((2^2)^2)$ can also be performed.

In some embodiments according to the invention, a masking circuit (for example, a finite field multiplier) may carry out masking for the inversion operation and multiplication in a finite field. In general, a finite field $GF((2^n)^m)$ consists of the following elements and operations when a certain m-order (m is a natural number) irreducible polynomial f(x) of a finite field $GF(2^n)$ is given. An arbitrary element g of the finite field $GF((2^n)^m)$ is uniquely represented by a polynomial of lower than (m-1)-order, which includes a predetermined coefficient in the finite field $GF(2^n)$. That is, $a_0, ..., a_{m-1} \in GF(2^n)$ exists uniquely so that the element g is represented as $g=a_0+a_1x+...+a_{m+1}x^{(m-1)}$.

For $g_1=a_0+a_1x+...+a_{m-1}x^{(m-1)}$ and $g_2=b_0+b_1x+...+b_{m-1}x^{(m-1)}$, the multiplication and addition in the finite field $GF((2^n)^m)$ are defined as follows.

$$g_1 + g_2 = (a_0 \oplus b_0) + (a_1 \oplus b_1) + ... + (a_{m-1} \oplus b_{m-1})x^{(m-1)}$$

$$g_1 \cdot g_2 = (a_0+a_1x+...+a_{m-1}x^{(m-1)} \cdot (b_0+b_{1x}+...+b_{m-1}x^{(m-1)} \bmod f(x)$$

Here, mod represents a modular operation. The finite field $GF((2^n)^m)$ is represented as $GF((2^n)^m) \cong GF(2^n)[x]/f(x)$. Accordingly, some embodiments according to the invention may utilize the following finite field.

$$GF(2^2) \cong GF(2)[x]/(x^2 + x + 1),$$

$$GF((2^2)^2) \cong GF(2^2)[x]/(x^2 + x + \Phi,$$

$$GF(((2^2)^2)^2) \cong GF((2^2)^2)[x]/(x^2 + x + \lambda),$$

$$GF(2^8) \cong GF(2)[x]/(x^8 + x^4 + x^3 + x+1)$$

Here, $\Phi = 10_2 \in GF(2^2)$ and $\lambda = 1100_2 \in GF((2^2)^2)$.

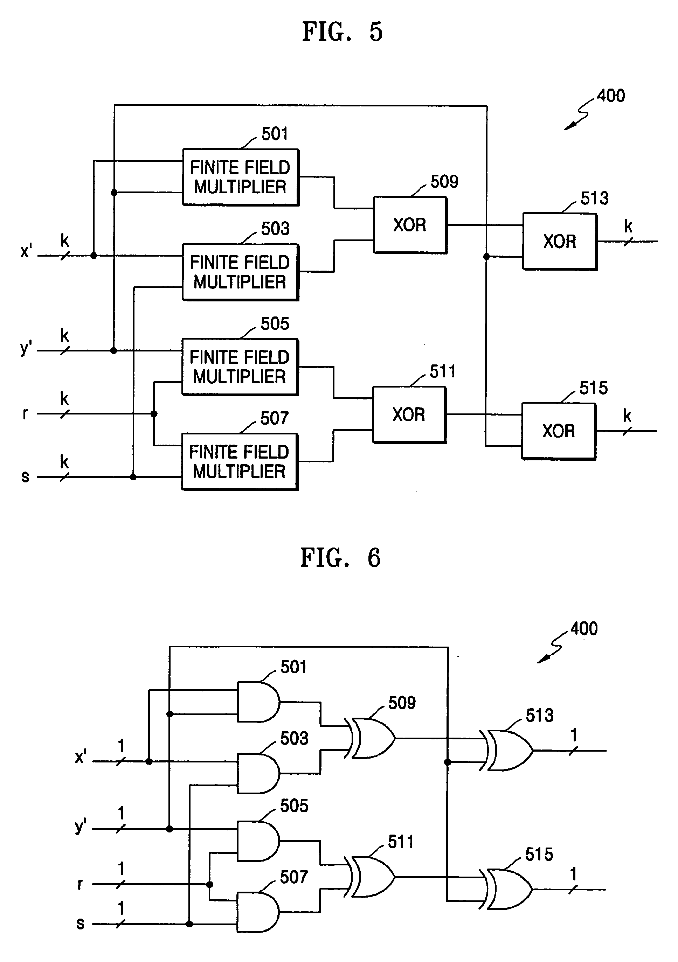

FIG. 5 is a block diagram of a multiplier according to a first embodiment of the present invention. The multiplier 400 (shown in FIGS. 3 and 4) carries out a masking method for the multiplication in $GF(2^2)$. A masking method for the inverse operation in $GF(((2^2)^2)^2)$ can be realized by using the multiplier of the present invention, which is used in a circuit for the multiplication in $GF((2^2)^Z)$ and a circuit for the inverse operation in $GF(((2^2)^2)^2)$. Accordingly, in some embodiments according to the invention, the masking method for the SubByte operation of the AES algorithm can be obtained so that the masking method for the AES algorithm can be also realized.

FIG. 5 shows the multiplier used to realize a masking method for a multiplication on a finite field $GF(2^k)$. Here, the masking method for the multiplication on the finite field $GF(2^k)$ is used to obtain masking of xy when masking (x', r),(y',s) of x, y$\in GF(2^k)$ is given. FIG. 5 shows an example of the multiplier 400 (shown in FIGS. 3 and 4) used to realize the masking method for the multiplication on the finite field $GF(2^k)$.

Functions $F((x',r),(y',s))$ for realizing the masking method for the multiplication on the finite field $GF(2^k)$ are as follows. Here, x' and y' represent masked data including k bits (k is a natural number), and r and s represent masking data including k bits. The symbol $\cdot$ means the multiplication of a finite field and $\oplus$ represents the exclusive-OR operation in the following functions.

1. $F_1((x', r), (y', s)) = (x'\cdot y'\oplus x'\cdot s \oplus y', y'\cdot r \oplus r\cdot s \oplus y')$;
2. $F_2((x', r), (y', s)) = (x'\cdot y'\oplus x'\cdot s \oplus s, y'\cdot r \oplus r\cdot s \oplus s)$;
3. $F_3((x', r), (y', s)) = (x'\cdot y'\oplus x'\cdot s \oplus x'\oplus y', y'\cdot r \oplus r\cdot s \oplus x'\oplus y')$;
4. $F_4((x', r), (y', s)) = (x'\cdot y'\oplus x'\cdot s\oplus x'\oplus r, y'\cdot r\oplus r\cdot s \oplus x'\oplus r)$;
5. $F_5((x', r), (y', s)) = (x'\cdot y'\oplus x'\cdot s \oplus x'\oplus s, y'\cdot r\oplus r\cdot s \oplus x'\oplus s)$;
6. $F_6((x', r), (y', s)) = (x'\cdot y'\oplus x'\cdot s \oplus y'\oplus r, y'\cdot r\oplus r\cdot s\oplus y'\oplus r)$;
7. $F_7((x', r), (y', s)) = (x'\cdot y'\oplus x'\cdot s \oplus r\oplus s, y'\cdot r \oplus r\cdot s \oplus r \oplus s)$;
8. $F_8((x', r), (y', s)) = (x'\cdot y'\oplus x'\cdot s\oplus x'\oplus y'\oplus r, y'\cdot r\oplus r\cdot s \oplus x'\oplus y'\oplus r)$;
9. $F_9((x', r), (y', s)) = (x'\cdot y'\oplus x'\cdot s \oplus x'\oplus r \oplus s, y'\cdot r \oplus r\cdot s \oplus x'\oplus r\oplus s)$;
10. $F_{10}((x', r), (y', s)) = (x'\cdot y'\oplus x'\cdot s \oplus x'\oplus y'\oplus r \oplus s, y'\cdot r \oplus r\cdot s \oplus x'\oplus y'\oplus r \oplus s)$;
11. $F_{11}((x',r),(y',s)) = (x'\cdot y'\oplus y'\cdot r\oplus x', x'\cdot s\oplus r\cdot s\oplus x')$;
12. $F_{12}((x', r), (y', s)) = (x'\cdot y'\oplus y'\cdot r \oplus r, x'\cdot s \oplus r \cdot s \oplus r)$;
13. $F_{13}((x',r),(Y',s)) = (x'\cdot y'\oplus y'\cdot r\oplus x'\oplus y', x'\cdot s\oplus r\cdot s\oplus x'\oplus y')$;
14. $F_{14}((x', r), (y', s)) = (x'\cdot y'\oplus y'\cdot r\oplus x'\oplus s, x'\cdot s\oplus r\cdot s\oplus x'\oplus s)$;
15. $F_{15}((x', r), (y', s)) = (x'\cdot y'\oplus y'\cdot r\oplus y'\oplus r, x'\cdot s \oplus r\cdot s \oplus y'\oplus r)$;
16. $F_{16}((x', r), (y', s)) = (x'\cdot y'\oplus y'\cdot r \oplus y'\oplus s, x'\cdot s\oplus r\cdot s \oplus y'\oplus s)$;
17. $F_{17}((x', r), (y', s)) = (x'\cdot y'\oplus y'\cdot r \oplus r \oplus s, x'\cdot s \oplus r\cdot s \oplus r \oplus s)$;
18. $F_{18}((x', r), (y', s)) = (x'\cdot y'\oplus y'\cdot r \oplus x'\oplus y'\oplus)s, x'\cdot s \oplus r\cdot s \oplus x'\oplus y'\oplus s)$;
19. $F_{19}((x', r), (y', s)) = (x'\cdot y'\oplus y'\cdot r \oplus y'\oplus r \oplus s, x'\cdot s \oplus r\cdot s \oplus y'\oplus r \oplus s)$;
20. $F_{20}((x', r), (y', s)) = (x'\cdot y'\oplus y'\cdot r \oplus x'\oplus y'\oplus r \oplus s, x'\cdot s \oplus r\cdot s \oplus x'\oplus y'\oplus r \oplus s)$;
21. $F_{21}((x',r),(y',s)) = (x'\cdot y'\oplus y'\cdot r\oplus x'\cdot s\oplus r\cdot s\oplus x', x')$;
22. $F_{22}((x', r), (y', s)) = (x'\cdot y'\oplus y'\cdot r \oplus x'\cdot s \oplus r\cdot s \oplus y', y')$;
23. $F_{23}((x', r), (y', s)) = (x'\cdot y'\oplus y'\cdot r \oplus x'\cdot s\oplus r \cdot s\oplus r, r)$;
24. $F_{24}((x', r), (y', s)) = (x'\cdot y'\oplus y'\cdot r \oplus x'\cdot s \oplus r\cdot s \oplus s, s)$;
25. $F_{25}((x', r), (y', s)) = (x'-y'\oplus y'\cdot r \oplus x'\cdot s \oplus r\cdot s \oplus x'\oplus y', x'\oplus y')$;
26. $F_{26}((x', r), (y', s)) = (x'-y'\oplus y'\cdot r\oplus x'\cdot s \oplus r\cdot s\oplus r\oplus s, r\oplus s)$;
27. $F_{27}((x', r), (y', s)) = (x'\cdot y'\oplus y'\cdot r \oplus x'\cdot s \oplus r\cdot s \oplus x'\oplus y'\oplus r, x'\oplus y'\oplus r)$;
28. $F_{28}((x', r), (y', s)) = (x'-y'\oplus y'\cdot r \oplus x'\cdot s \oplus r\cdot s \oplus x'\oplus y'\oplus s, x'\oplus y'\oplus s)$;
29. $F_{29}((x', r), (y', s)) = (x'\cdot y'\oplus y'\cdot r\oplus x'\cdot s \oplus r\cdot s \oplus x'\oplus r \oplus s, x'\oplus r\oplus s)$;
30. $F_{30}((x', r), (y', s)) = (x'\cdot y'\oplus y'\cdot r\oplus x'\cdot s \oplus r\cdot s\oplus y'\oplus r\oplus s, y'\oplus r \oplus s)$

That is, the multiplier shown in FIG. 5 implements the function $F_1((x', r), (y', s)) = (x'\cdot y'\oplus x'\cdot s \oplus y', y'\cdot r \oplus r\cdot s \oplus y')$. Referring to FIG. 5, a finite field multiplier 501 receives x' and y' and multiplies x' by y'. A finite field multiplier 503 receives x' and s and multiplies x' by s. A finite field multiplier 505 receives y' and r and multiplies y' by r. A finite field multiplier 507 receives r and s and multiplies r by s.

An exclusive-OR gate 509 exclusive-ORs the output signals of the finite field multipliers 501 and 503, and an exclusive-OR gate 511 exclusive-ORs the output signals of the finite field multipliers 505 and 507. An exclusive-OR gate 513 exclusive-ORs y' and the output signal of the finite field multiplier 509, and an exclusive-OR gate 515 exclusive-ORs y' and the output signal of the finite field multiplier 511.

FIG. 6 is a circuit diagram of the multiplier shown in FIG. 5. The circuit shown in FIG. 6 implements the function $F_1 ((x', r), (y', s)) = (x' \cdot y' \oplus x' \cdot s \oplus y', y' \cdot r \oplus r \cdot s \oplus y')$ when k=1. Referring to FIGS. 5 and 6, each of the finite field multipliers 501, 503, 505 and 507 can be constructed using an AND gate.

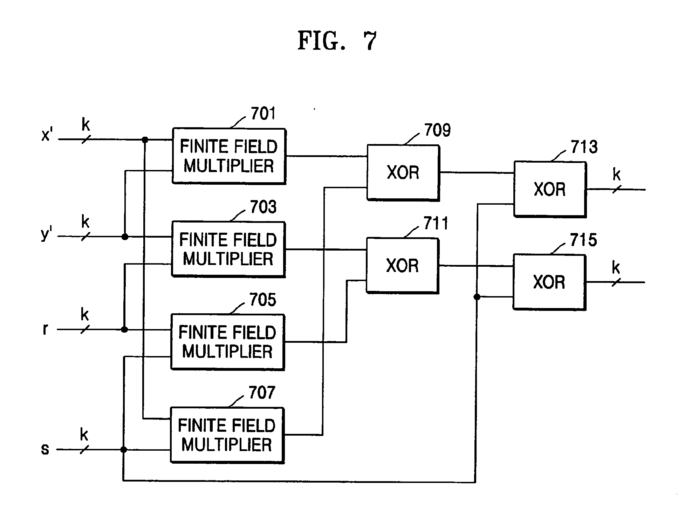

FIG. 7 is a block diagram of a multiplier according to a second embodiment of the present invention. The construction shown in FIG. 7 executes the function $F_2 ((x', r), (y', s)) = (x' \cdot y' \oplus x' \cdot s \oplus s, y' \cdot r \oplus r \cdot s \oplus s)$. Referring to FIG. 7, a finite field multiplier 701 receives x' and y' and multiplies x' by y'. A finite field multiplier 703 receives y' and r and multiplies y' by r. A finite field multiplier 705 receives r and s and multiplies r by s. A finite field multiplier 707 receives x' and s and multiplies x' by s.

An exclusive-OR gate 709 exclusive-ORs the output signals of the finite field multipliers 701 and 707, and an exclusive-OR gate 711 exclusive-ORs the output signals of the finite field multipliers 703 and 705. An exclusive-OR gate 713 exclusive-ORs s and the output signal of the finite field multiplier 709, and an exclusive-OR gate 715 exclusive-ORs s and the output signal of the finite field multiplier 711. The functions $F_2 ((x', r), (y', s))$ through $F_{30} ((x', r), (y', s))$ can be understood by those having ordinary skill in the art so that detailed explanations therefor are omitted.

As described above, in some embodiments according to the invention, the multiplier used in the finite field multiplication circuit and the finite field inverse operation circuit according to the present invention can provide a countermeasure against the simple power analysis for an algorithm that uses a finite field operation as an internal operation, such as the AES algorithm. Furthermore, multipliers according to embodiments of the present invention may provide a countermeasure against the differential power analysis for the block cipher algorithm.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An Advanced Encryption System (AES) compliant circuit comprising:

   a multiplier circuit configured to multiply masked data with masking data to provide multiplied outputs therefrom; and
   a combinatorial circuit coupled to the multiplier circuit and configured to combine the multiplied outputs with at least one of the masked data or at least one of the masking data.

2. A circuit according to Claim 1 wherein the multiplier circuit comprises:

   a first finite field multiplier for receiving first masked data and second masked data and carrying out finite field multiplication on the first masked data and second masked data;
   a second finite field multiplier for receiving the first masked data and first masking data and carrying out finite field multiplication on the first masked data and first masking data;
   a third finite field multiplier for receiving the second masked data and second masking data and carrying out finite field multiplication on the second masked data and second masking data;
   a fourth finite field multiplier for receiving the first masking data and the second masking data and carrying out finite field multiplication on the first masking data and second masking data, and wherein the combinatorial circuit comprises:

      a first exclusive-OR circuit for receiving the output signals of the first and second finite field multipliers and exclusive-ORing the output signals of the first and second finite field multipliers;
      a second exclusive-OR circuit for receiving the second masked data and the output signal of the first exclusive-OR circuit and exclusive-ORing the second masked data and the output signal of the first exclusive-OR circuit;
      a third exclusive-OR circuit for receiving the output signals of the third and fourth finite field multipliers and exclusive-ORing the output signals of the third and fourth finite field multipliers; and
      a fourth exclusive-OR circuit for receiving the second masked data and the output signal of the third exclusive-OR circuit and exclusive-ORing the second masked data and the output signal of the third exclusive-OR circuit.

3. A circuit according to Claim 1 wherein the multiplier circuit comprises:

   a first finite field multiplier for receiving first masked data and second masked data and carrying out finite field multiplication on the first masked data and second masked data;

a second finite field multiplier for receiving the first masked data and first masking data and carrying out finite field multiplication on the first masked data and first masking data;

a third finite field multiplier for receiving the second masked data and second masking data and carrying out finite field multiplication on the second masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the first masking data and the output signal of the first exclusive-OR circuit and exclusive-ORing the first masking data and the output signal of the first exclusive-OR circuit;

a third exclusive-OR circuit for receiving the output signals of the third and fourth finite field multipliers and exclusive-ORing the output signals of the third and fourth finite field multipliers; and

a fourth exclusive-OR circuit for receiving the first masking data and the output signal of the third exclusive-OR circuit and exclusive-ORing the first masking data and the output signal of the third exclusive-OR circuit.

4. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the first masked data and the output signal of the first exclusive-OR circuit and exclusive-ORing the first masked data and the output signal of the first exclusive-OR circuit;

a third exclusive-OR circuit for receiving the output signals of the third and fourth finite field multipliers and exclusive-ORing the output signals of the third and fourth finite field multipliers; and

a fourth exclusive-OR circuit for receiving the first masked data and the output signal of the third exclusive-OR circuit and exclusive-ORing the first masked data and the output signal of the third exclusive-OR circuit.

5. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the first masking data and the output signal of the first exclusive-OR circuit and exclusive-ORing the first masking data and the output signal of the first exclusive-OR circuit;

a third exclusive-OR circuit for receiving the output signals of the third and fourth finite field multipliers and exclusive-ORing the output signals of the third and fourth finite field multipliers; and

a fourth exclusive-OR circuit for receiving the first masking data and the output signal of the third exclusive-OR circuit and exclusive-ORing the first masking data and the output signal of the third exclusive-OR circuit.

6. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the output signal of the first exclusive-OR circuit and the output signal of the third finite field multiplier and exclusive-ORing the output signal of the first exclusive-OR circuit and the output signal of the third finite field multiplier;

a third exclusive-OR circuit for receiving the output signal of the second exclusive-OR circuit and the output signal of the fourth finite field multiplier and exclusive-ORing the output signal of the second exclusive-OR circuit and the output signal of the fourth finite field multiplier; and

a fourth exclusive-OR circuit for receiving the first masked data and the output signal of the third exclusive-OR circuit, exclusive-ORing the first masked data and the output signal of the third exclusive-OR circuit, and outputting the exclusive-ORed result as a first output signal of the multiplier,

wherein the multiplier outputs the first masked data as a second output signal.

7. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the output signal of the first exclusive-OR circuit and the output signal of the third finite field multiplier and exclusive-ORing the output signal of the first exclusive-OR circuit and the output signal of the third finite field multiplier;

a third exclusive-OR circuit for receiving the output signal of the second exclusive-OR circuit and the output signal of the fourth finite field multiplier and exclusive-ORing the output signal of the second exclusive-OR circuit and the output signal of the fourth finite field multiplier; and

a fourth exclusive-OR circuit for receiving the second masked data and the output signal of the third exclusive-OR circuit, exclusive-ORing the second masked data and the output signal of the third exclusive-OR circuit, and outputting the exclusive-ORed result as a first output signal of the multiplier,

wherein the multiplier outputs the second masked data as a second output signal.

8. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the output signal of the first exclusive-OR circuit and the output signal of the third finite field multiplier and exclusive-ORing the output signal of the first exclusive-OR circuit and the output signal of the third finite field multiplier;

a third exclusive-OR circuit for receiving the output signal of the second exclusive-OR circuit and the output signal of the fourth finite field multiplier and exclusive-ORing the output signal of the second exclusive-OR circuit and the output signal of the fourth finite field multiplier; and

a fourth exclusive-OR circuit for receiving the first masking data and the output signal of the third exclusive-OR circuit, exclusive-ORing the first masking data and the output signal of the third exclusive-OR circuit, and outputting the exclusive-ORed result as a first output signal of the multiplier,

wherein the multiplier outputs the first masking data as a second output signal.

9. A circuit according to Claim 1 wherein the multiplier circuit comprises:

a first finite field multiplier for receiving first masked data and second masked data and carrying out finite field multiplication on the first masked data and second masked data;

a second finite field multiplier for receiving the second masked data and first masking data and carrying out finite field multiplication on the second masked data and first masking data;

a third finite field multiplier for receiving the first masked data and second masking data and carrying out finite field multiplication on the first masked data and second masking data;

a fourth finite field multiplier for receiving the first masking data and the second masking data and carrying out finite field multiplication on the first masking data and second masking data, and wherein the combinatorial circuit comprises:

a first exclusive-OR circuit for receiving the output signals of the first and second finite field multipliers and exclusive-ORing the output signals of the first and second finite field multipliers;

a second exclusive-OR circuit for receiving the output signal of the first exclusive-OR circuit and the output signal of the third finite field multiplier and exclusive-ORing the output signal of the first exclusive-OR circuit and the output signal of the third finite field multiplier;

a third exclusive-OR circuit for receiving the output signal of the second exclusive-OR circuit and the output signal of the fourth finite field multiplier and exclusive-ORing the output signal of the second exclusive-OR circuit and the output signal of the fourth finite field multiplier; and

a fourth exclusive-OR circuit for receiving the second masking data and the output signal of the third exclusive-OR circuit, exclusive-ORing the second masking data and the output signal of the third exclusive-OR circuit, and outputting the exclusive-ORed result as a first output signal of the multiplier,

wherein the multiplier outputs the second masking data as a second output signal.

10. A method of processing data in an Advanced Encryption System (AES) comprising:

multiplying masked data with masking data to provide multiplied outputs and combining the multiplied outputs with at least one of the masked data or at least one of the masking data.

**11.** A method according to Claim 10 wherein multiplying comprises generating first and second output signals using the equation $F((x', r), (y', s)) = (x'·y'⊕x'·s ⊕ x'⊕ y', y'·r ⊕ r·s ⊕ x'⊕ y')$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**12.** A method according to Claim 10 wherein multiplying comprises generating first and second output signals using the equation $F((x', r), (y', s)) = (x'·y'⊕x'·s ⊕ x'⊕r, y'·r ⊕ r· s ⊕ x'⊕r)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**13.** A method according to Claim 10 wherein multiplying comprises generating first and second output signals using the equation $F((x', r), (y', s)) = (x'·y'⊕x'·s ⊕ x'⊕s, y'·r ⊕ r·s ⊕ x'⊕s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**14.** A method according to Claim 10 wherein multiplying comprises generating first and second output signals using the equation $F((x', r), (y', s)) = (x'·y'⊕x'·s ⊕ y'⊕r, y'·r ⊕ r·s ⊕ y'⊕r)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**15.** A method according to Claim 10 wherein multiplying comprises generating first and second output signals using the equation $F((x', r), (y', s)) = (x'·y'(⊕x'·s ⊕ r ⊕ s, y'·r ⊕ r·s ⊕ r ⊕ s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**16.** A method according to Claim 10 wherein multiplying comprises generating first and second output signals using the equation $F((x', r), (y', s)) = (x'·y'⊕x'·s ⊕ x'⊕ y'⊕r, y'·r⊕r·s ⊕ x'⊕y'⊕r)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**17.** A method according to Claim 10 wherein multiplying comprises generating first and second output signals using the equation $F((x', r), (y', s)) = (x'·y'⊕x'·s ⊕ x'⊕r ⊕ s, y'·r ⊕ r · s ⊕ x'⊕r ⊕ s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**18.** A method according to Claim 10 wherein multiplying comprises generating first and second output signals using the equation $F((x', r), (y', s)) = (x'·y'⊕x'·s ⊕ x'⊕y'⊕r ⊕ s, y'·r ⊕ r· s ⊕ x'⊕y'⊕r ⊕ s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**19.** A method according to Claim 10 wherein multiplying comprises generating first and second output signals using the equation $F((x', r), (y', s)) = (x'·y'⊕y'·r ⊕ x'⊕y', x'·s ⊕ r·s ⊕ x'⊕y')$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**20.** A method according to Claim 10 wherein multiplying comprises generating first and second output signals using the equation $F((x', r), (y', s)) = (x'·y'⊕y'·r ⊕ x'⊕s, x'·s ⊕ r·s ⊕ x'⊕s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

21. A method according to Claim 10 wherein multiplying comprises generating first and second output signals using the equation $F((x', r), (y', s)) = (x' \cdot y' \oplus y' \cdot r \oplus y' \oplus r, x' \cdot s \oplus r \cdot s \oplus y' \oplus r)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

22. A method according to Claim 10 wherein multiplying comprises generating first and second output signals using the equation $F((x', r), (y', s)) = (x' \cdot y' \oplus y' \cdot r \oplus y' \oplus s, x' \cdot s \oplus r \cdot s \oplus y' \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

23. A method according to Claim 10 wherein multiplying comprises generating first and second output signals using the equation $F((x', r), (y', s)) = (x' \cdot y' \oplus y' \cdot r \oplus r \oplus s, x' \cdot s \oplus r \cdot s \oplus r \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

24. A method according to Claim 10 wherein multiplying comprises generating first and second output signals using the equation $F((x', r), (y', s)) = (x' \cdot y' \oplus y' \cdot r \oplus x' \oplus y' \oplus s, x' \cdot s \oplus r \cdot s \oplus x' \oplus y' \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

25. A method according to Claim 10 wherein multiplying comprises generating first and second output signals using the equation $F((x', r), (y', s)) = (x' \cdot y' \oplus y' \cdot r \oplus y' \oplus r \oplus s, x' \cdot s \oplus r \cdot s \oplus y' \oplus r \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

26. A method according to Claim 10 wherein multiplying comprises generating first and second output signals using the equation $F((x', r), (y', s)) = (x' \cdot y' \oplus y' \cdot r \oplus x' \oplus y' \oplus r \oplus s, x' \cdot s \oplus r \cdot s \oplus x' \oplus y' \oplus r \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

27. A method according to Claim 10 wherein multiplying comprises generating first and second output signals using the equation $F((x', r), (y', s)) = (x' \cdot y' \oplus y' \cdot r \oplus x' \cdot s \oplus r \cdot s \oplus x' \oplus y', x' \oplus y')$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

28. A method according to Claim 10 wherein multiplying comprises generating first and second output signals using the equation $F((x', r), (y', s)) = (x' \cdot y' \oplus y' \cdot r \oplus x' \cdot s \oplus r \cdot s \oplus r \oplus s, r \oplus s)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

29. A method according to Claim 10 wherein multiplying comprises generating first and second output signals using the equation $F((x', r), (y', s)) = (x' \cdot y' \oplus y' \cdot r \oplus x' \cdot s \oplus r \cdot s \oplus x' \oplus y' \oplus r, x' \oplus y' \oplus r)$ where x' represents first masked data including k bits, y' denotes second masked data including k bits, r represents first masking data including k bits, s denotes second masking data including k bits, the symbol · means a finite field multiplication, and the symbol $\oplus$ means an exclusive-OR operation.

30. A method according to Claim 10 wherein multiplying comprises generating first and second output signals using the equation $F((x', r), (y', s)) = (x' \cdot y' \oplus y' \cdot r \oplus x' \cdot s \oplus r \cdot s \oplus x' \oplus y' \oplus s, x' \oplus y' \oplus s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**31.** A method according to Claim 10 wherein multiplying comprises generating first and second output signals using the equation $F((x', r), (y', s)) – (x' \cdot y' \oplus y' \cdot r \oplus x' \cdot s \oplus r \cdot s \oplus x' \oplus r \oplus s, x' \oplus r \oplus s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**32.** A method according to Claim 10 wherein multiplying comprises generating first and second output signals using the equation $F((x', r), (y', s)) = (x' \cdot y' \oplus y' \cdot r \oplus x' \cdot s \oplus r \cdot s \oplus y' \oplus r \oplus s, y' \oplus r \oplus s)$ where x' represents first masked data including k bits, y' denotes second masked data including k bits, r represents first masking data including k bits, s denotes second masking data including k bits, the symbol · means a finite field multiplication, and the symbol ⊕ means an exclusive-OR operation.

**33.** A computer program product for providing Advanced Encryption System (AES) compliant processing comprising a computer readable medium having computer readable program code embodied therein, the computer readable program product comprising:

computer readable program code configured to multiply masked data with masking data to provide multiplied outputs; and
computer readable program code configured to combine the multiplied outputs with at least one of the masked data or at least one of the masking data.

# FIG. 1

INPUT

$/8$

$A^{-1}(x+b)$

MUX ◄— ENC/DEC

INVERSE IN GF $(2^8)$

ISOMORPHISM $\sigma$

100 —
INVERSE IN
GF$(((2^2)^2)^2)$

$\sigma^{-1}$

$Ax+b$

MUX

$/8$

OUTPUT

# FIG. 2

# FIG. 3

x : multiplication in $GF(2^2)$

$\oplus$ : XOR

# FIG. 4

$x^2$ : squaring in GF($2^2$)

$x$ : multiplication GF($2^2$)

# FIG. 5

# FIG. 6

FIG. 7